# EUROPÄISCHE PATENTSCHRIFT

(11) **EP 1 129 033 B1**
(45) Veröffentlichungstag und Bekanntmachung des Hinweises auf die Patenterteilung: **02.02.2005**
(21) Anmeldenummer: 98963436.5
(22) Anmeldetag: 10.11.1998
(51) Int. Cl.: C01F 7/00, D21H 17/67, D21H 19/38

(54) **VERFAHREN ZUR HERSTELLUNG KRISTALLWASSER-HALTIGER CALCIUMVERBINDUNGEN**
METHOD FOR PRODUCING CALCIUM COMPOUNDS CONTAINING WATER OF CRYSTALLISATION
PROCEDE DE PRODUCTION DE LIAISONS DE CALCIUM CONTENANT DE L'EAU DE CRISTALLISATION

(43) Veröffentlichungstag der Anmeldung: 05.09.2001
(73) Patentinhaber: Rethmann Lippewerk GmbH, 44536 Lünen (DE)
(72) Erfinder: LEHMKUHL, Josef, D-45721 Haltern (DE); FENDEL, Ansgar, D-44141 Dortmund (DE); BINGS, Hubert, D-44532 Lünen (DE)
(74) Vertreter: Hartmann, Günter, Dr. Dipl.-Chem.
(86) Internationale Anmeldenummer: PCT/EP1998/007174
(87) Internationale Veröffentlichungsnummer: WO 2000/027752

(56) Entgegenhaltungen:
- EP-A- 0 723 933
- WO-A-92/15525
- DD-A- 153 967
- DE-A- 19 611 454
- US-A- 2 636 830

## Beschreibung

Die Erfindung betrifft die Herstellung und Verwendung Kristallwasser-haltiger Calciumverbindungen, insbesondere ionogen gebundener Verbindungen auf Calciumaluminathydrat- und Calciumaluminatsalz-Basis, vorzugsweise der entsprechenden Sulfate, Silicate, Carbonate, Fluoride und/oder Chloride. Die dabei erhaltenen unterschiedlichen Verbindungen sind verwendbar als Füllstoffe oder hochweiße Pigmente bei der Herstellung von Farben und Lacken, beispielsweise bei der Herstellung von Farben und Lacken für den Innen- und Außenbereich oder für den Rostschutz auf Metallen, als flammhemmender Füllstoff für den Brandschutz in Baustoffen, Isoliermaterialien, Putzen und Farben sowie als Füllstoff zur Herstellung von Gips- bzw. Bauplatten, Putzen,Farben oder als hydraulisch aktives Additiv zur Herstellung von Quellzementen, Quellgipsen und Estrichen sowie als Quellkomponente für explosionsfreie Sprengmittel.

Füllstoffe und Additive, insbesondere mineralische Füllstoffe und Additive, werden in großem Umfang unter anderem in der Kunststoff-, Farben-, Reifen- und Keramikindustrie sowie in der Baustoffindustrie verwendet.

Mineralische Natur-Füllstoffe müssen abgebaut, gereinigt (z.B. gewaschen) und gemahlen werden. Höhere Qualitätsanforderungen der Füllstoff-Verarbeiter haben dazu geführt, daß vermehrt synthetische Präzipitate, vorzugsweise gefälltes Calciumcarbonat, eingesetzt werden. Man hat auch bereits mehrfach versucht, Gips (Calciumsulfat) als Füllstoff einzusetzen, insbesondere die in großen Mengen anfallenden Reaktionsprodukte aus den Rauchgas-Entschwefelungsanlagen von Kraftwerken (REA-Gips). Dies scheiterte bisher jedoch daran, daß Calciumsulfat bis zu einer Konzentration von etwa 2 g SO₄²⁻ pro Liter wasserlöslich ist und kein ausreichender "Weißgrad" erreicht wurde.

In der Papierindustrie wird bereits ein Calciumaluminiumsulfat-Präzipitat als Streichpigment für hochwertige Papiere eingesetzt. Dieses Produkt wird aus den Rohstoffen Aluminiumsulfat und Kalkhydrat nach der folgenden Reaktionsgleichung gewonnen:

Al₂(SO₄)₃ + 6Ca(OH)₂ + 5H₂O → Ca₆Al₂((OH)₄)SO₄)₃ . 5H₂O

Weil die obengenannte chemische Reaktion spontan nur bei hohem pH-Wert > 12 abläuft, ist ein Überschuß an Kalkhydrat erforderlich. Weiterhin können nach dieser Methode nur Suspensionen mit einem Feststoffgehalt < 50 % hergestellt werden, die u.a. als Satinweiß bekannt sind.

Aus US-A-2 636 830 ist ein einstufiges Verfahren zur Herstellung einer Kristallwasser-haltigen Calciumverbindung der Formel 4CaO.Al₂O₃.CO₂.8H₂O bekannt, bei dem CaO und lösliches Natriumaluminat in Gegenwart von CO₂ miteinander umgesetzt werden. Nach den Angaben in Beispiel A dieser Druckschrift lässt man das dabei erhaltene kristalline Produkt absitzen, entwässert und trocknet bei 104 °C, woran sich eine Reinigung durch mehrmaliges Aufschlämmen in Wasser und Sedimentation anschließt.

Auch aus DE-A-196 11 454 ist ein einstufiges Verfahren zur Herstellung einer Kristallwasser-haltigen Calciumverbindung bekannt, bei dem ein Sulfat-haltiges Medium mit Kalkmilch und einer alkalischen Natriumaluminat-Lösung bei pH > 11 unter gleichzeitigem Einleiten von CO₂ umgesetzt wird. Das dabei erhaltene Calciumaluminiumsulfat-Calciumcarbonat-Produkt wird anschließend entwässert, getrocknet und gemahlen.

Die bei den Verfahren nach den beiden vorgenannten Druckschriften erhältlichen Calciumverbindungen werden als Füllstoffe bei der Herstellung von Papier verwendet. Eine weitere Umsetzung der erhaltenen Produkte mit einer Mineralsäure oder einem Salz derselben unter Bildung eines Calciumaluminatsalz-Präzipitats mit hohem Kristallwasser-Gehalt ist in beiden Fällen nicht vorgesehen.

Ein weiterer großer Anwendungsbedarf für mineralische Füllstoffe ergibt sich in der gesamten Baustoffindustrie. Die Entwicklung geht hier zur Fertigbauweise und dem vermehrten Einsatz von Bauplatten. Diese sollen möglichst stabil, wärme- und schalldämmend, aber dennoch leicht und mit guten Brandschutzeigenschaften ausgestattet sein. Aus diesem Grund werden in steigendem Maße Bauplatten auf der Basis von Gips, entweder als Gipskartonplatten (außen Karton, innen Gips) oder als Gipsfaserplatten (z.B. Gemische von Papierfasem und Gips) hergestellt. Gips hat einen Kristallwasseranteil von 2 mol bzw. 21 Gew.-%. Somit ist ein gewisser Brandschutz gewährleistet. Dieser Brandschutz könnte jedoch mit Calciumaluminatsalz-Präzipitaten mit höherem Gehalt an Kristallwasser deutlich verbessert werden.

Ein weiterer Anwendungsfall ergibt sich bei der Herstellung von Dämmplatten auf der Basis von Fasern oder andersartiger Isoliermaterialien. Diese werden aus Zellstoff, Altpapier, Alttextilien, Kokos u.a. Faserstoffen durch Pressen hergestellt und müssen durch Zugabe von geeigneten Additiven einen ausreichenden Brandschutz aufweisen. Als Brandschutzmittel eignen sich dafür- mineralische Stoffe mit einem hohen Kristallwassergehalt.

Eine weitere Möglichkeit für die Anwendung von Calciumaluminat-Produkten in der Baustoffindustrie ist der Einsatz als Quellkomponente. Hier werden Calciumaluminate und Calciumsulfoaluminate verwendet, deren Herstellung durch Sintern von Rohstoffen wie Bauxit, Gips und Kalk bei sehr hohen Temperaturen von bis zu 1400°C erfolgt. Diese Herstellung ist sehr kostenintensiv und aufwendig. Eine alternative kostengünstigere Herstellung von Quellkomponenten wäre daher sehr erwünscht.

Aufgabe der Erfindung war es daher, Kristallwasser-haltige Calciumverbindungen zu finden, die sich im Rahmen eines großtechnisch durchführbaren Verfahrens als Präzipitate kostengünstig und leicht herstellen lassen und die mit Vorteil auf den obengenannten Anwendungsgebieten eingesetzt werden können.

Es wurde überraschend gefunden, dass die oben genannte Aufgabe auf wirtschaftliche und technisch einfache Weise gelöst werden kann durch Herstellung von Calciumverbindungen mit hohem Kristallwasser-Gehalt nach einem Verfahren, bei dem in einer ersten Präzipitationsstufe Natriumaluminat und Calcium(hydr)oxid in wäßriger Lösung bzw. Aufschlämmung miteinander umgesetzt werden unter Bildung eines Präzipitats aus einem Gemisch von Kristallwasser-haltigen Calciumaluminathydraten, das nach der Abtrennung und Reinigung in einer zweiten Präzipitatsstufe mit einer oder mehreren Mineralsäuren und/oder Salzen davon umgesetzt wird unter Bildung eines Calciumaluminatsalz-Präzipitats mit hohem Kristallwasser-Gehalt, das anschließend auf an sich bekannte Weise abgetrennt, gereinigt, zerkleinert und gegebenenfalls getrocknet wird.

Gegenstand der Erfindung ist gemäß einem ersten Aspekt ein Verfahren zur Herstellung Kristallwasser-haltiger Calciumverbindungen durch chemische Umsetzung von Natriumaluminat und Calciumhydroxid in wässriger Lösung bzw. Aufschlämmung, das dadurch gekennzeichnet ist, daß man
a) eine wäßrige alkalische Natriumaluminat-Lösung mit festem oder gelöstem bzw. suspendiertem Calcium(hydr)oxid (Kalkmilch) in Gegenwart von Kohlendioxid umsetzt unter Bildung eines Präzipitats aus einem Gemisch von Kristallwasser-haltigen Cafciumaluminathydraten mit der folgenden modalen Summenformel:

   xCaO₃ . Al₂O₃ . yH₂O (worin x = 3-6 und y = 6-32),

   (nachstehend allgemein als "Kristallwasser-haltiges Calciumaluminathydrat" bezeichnet),
b) das dabei erhaltene Präzipitat in an sich bekannter Weise durch Sedimentation abtrennt, entwässert, mit Wasser wäscht und den dabei erhaltenen Filterkuchen gegebenenfalls trocknet, und
c) den in der Stufe (b) erhaltenen Filterkuchen in feuchter oder getrockneter Form in Wasser suspendiert und mit mindestens einer Mineralsäure und/oder mindestens einem Salz derselben versetzt unter Bildung eines Kristallwasser-haltigen Calciumaluminatsalz-Präzipitats,
d) das man in an sich bekannter Weise durch Sedimentation abtrennt, entwässert, mit Wasser wäscht und den dabei erhaltenen Filterkuchen zerkleinert und gegebenenfalls trocknet und/oder mahlt.

Das erfindungsgemäße Verfahren ist technisch einfach und besonders wirtschaftlich, weil die eingesetzten Ausgangsmaterialien in großer Menge und zu geringen Kosten zur Verfügung stehen.

Als wäßrige alkalische Natriumaluminatlösung setzt man vorzugsweise eine Abfallbeizlauge ein, wie sie bei der Oberflächenbehandlung von Aluminiummetall mit Natronlauge gewonnen wird bzw. als Abfallprodukt anfällt.

Eine besonders bevorzugt verwendete wäßrige alkalische Natriumaluminatlösung bzw. Abfallbeizlauge ist eine solche, in der Na₂O und Al₂O₃ in einem Molverhältnis von (1,0 bis 10,0):1, vorzugsweise von (1,2 bis 2,5):1, vorliegen.

Gemäß einer bevorzugten Ausgestaltung der Erfindung legt man in der Stufe (a) eine verdünnte Natronlauge vor und gibt dann die alkalische Natriumaluminatlösung zu, der man dann Calciumhydroxid oder Calciumoxid in fester oder gelöster bzw. in Natronlauge suspendierter Form zusetzt. Die Reihenfolge der Zugabe von Natriumaluminatlösung und Calcium(hydr)oxid kann aber auch umgekehrt werden.

Als Calciumverbindung(en) verwendet man vorzugsweise Kalkmilch (Kalkhydrat bzw. Ca(OH₂)) oder Branntkalk (CaO).

Die Calciumverbindung(en) wird (werden) vorzugsweise in einer Menge von 2 bis 8 mol CaO-Äquivalenten, insbesondere von 3 bis 5 mot CaO-Äquivalenten, auf 1 mol Al₂O₃-Äquivalent eingesetzt.

Die Präzipitatfällung in der Stufe (a) wird vorzugsweise innerhalb einer Reaktionszeit von 5 bis 3000 min, insbesondere von 60 bis 600 min, bei einer Temperatur von 5 bis 60°C, insbesondere von 30 bis 50°C, durchgeführt. Dabei entsteht ein weißes Kristallwasser haltiges Calciumaluminathydrat Präzipitat.

Gemäß einer bevorzugten Ausgestaltung der Erfindung wird das Calciumaluminathydrat-Präzipitat in der Stufe (b) mechanisch entwässert, insbesondere unter Verwendung einer Kammerfilterpresse, einer Membranfilterpresse, eines Vakuumbandfilters oder einer Zentrifuge.

Anschließend wird das entwässerte und gegebenenfalls mit Wasser gewaschene Kristallwasser-haltige Calciumaluminathydrat-Präzipitat bei einer Temperatur zwischen 50 und 200°C, vorzugsweise bei < 100 °C getrocknet und zerkleinert, vorzugsweise gemahlen, oder es wird bei einer Temperatur von 100 bis 1300°C, vorzugsweise von 100 bis 500°C, getrocknet bzw. calciniert und zerkleinert, vorzugsweise gemahlen.

Gemäß einer weiteren bevorzugten Ausgestaltung der Erfindung wird der entwässerte und gegebenenfalls mit Wasser gewaschene Filterkuchen der Stufe (b) in Wasser suspendiert und mit mindestens einer Mineralsäure und/oder mindestens einem Salz derselben versetzt unter Bildung eines kristallinen Calciumaluminatsalz-Präzipitats mit einem hohen Kristallwasser-Gehalt, das dann wie weiter oben angegeben weiterverarbeitet wird.

Dem in Wasser suspendierten Filterkuchen der Stufe (b) wird (werden) in der Stufe (c) als Mineralsäure(n) vorzugsweise Salzsäure, Flußsäure, Schwefelsäure, Kieselsäure und/oder Kohlensäure bzw. Salze derselben, insbesondere deren Alkalimetall-, Erdalkalimetall- und Aluminium-Salze, zugegeben.

Als Mineralsäure wird besonders bevorzugt eine Aluminium-haltige Schwefelsäure, wie sie insbesondere als Abfallprodukt in Eloxal-Betrieben anfällt, verwendet.

Dem in der Stufe (b) erhaltenen Filterkuchen, suspendiert in Wasser, gibt man vorzugsweise Sulfat im Verhältnis von 1 Gew.-Teil Al zu 4 bis 7 Gew.-Teilen SO₄, bezogen auf den Gesamt-Aluminiumgehalt der Suspension, zu.

Gemäß einer weiteren bevorzugten Ausgestaltung der Erfindung gibt man zusätzlich Anionen der obengenannten Mineralsäure(n) oder/und deren Salze im Verhältnis von 1 Gew.-Teil Aluminium zu 0,5 bis 10 Gew.-Teilen Anionen, bezogen auf den Gesamt-Aluminiumgehalt der Suspension, zu.

Das nach dem erfindungsgemäßen Verfahren in der Stufe (c) erhältliche, Kristallwasser-haltige Präzipitat kann durch Sedimentation abgetrennt und als solches verwendet werden, gegebenenfalls kann es aber auch vor der Verwendung entwässert, vorzugsweise unter Anwendung der Druckfiltration, insbesondere mittels einer Kammerfilterpresse oder einer Membranfilterpresse, sowie alternativ unter Verwendung eines Vakuumbandfilters oder einer Zentrifuge, gegebenenfalls mit Wasser gewaschen und anschließend schonend bei einer Temperatur unter 100°C, vorzugsweise zwischen 30 und 60°C, getrocknet und zerkleinert, vorzugsweise gemahlen, werden. Nach dem Abtrennen, Entwässem und Trocknen kann das Präzipitat aber auch bei einer Temperatur von 100 bis 500°C, vorzugsweise bei 100 bis 200°C, behandelt und zerkleinert, vorzugsweise gemahlen, werden.

Die Fällungsreaktion in der Stufe (c) wird vorzugsweise in einer Behandlungszone, insbesondere in Rührwerksbehältern unter Rühren, oder in mehreren Behandlungszonen, insbesondere in mehreren hintereinander geschalteten Behältem unter Rühren, kontinuierlich durchgeführt.

Die Fällung in der Stufe (c) wird vorzugsweise innerhalb einer Reaktionszeit von 5 bis 3000 min, insbesondere von 120 bis 600 min, durchgeführt bei einer Temperatur von vorzugsweise 5 bis 60°C, insbesondere von 20 bis 40°C.

Das nach dem erfindungsgemäßen Verfahren hergestellte Präzipitat kann nach dem Entwässern, jedoch auch unter Verwendung geeigneter Dispergatoren suspendiert und als Füllstoff- oder Streichpigment-Suspension zur Herstellung von Farben und Lacken, Baustoffen, z.B. Putzen, verwendet werden.

Ein weiterer Gegenstand der Erfindung ist die Verwendung der wie vorstehend beschrieben hergestellten, Kristallwasser-haltigen Produkte als flammhemmender Füllstoff für den Brandschutz in Baustoffen, Isoliermaterialien, Putzen, bei der Herstellung von Farben und Lacken, als Füllstoff zur Herstellung von Gips- bzw. Bauplatten oder als hydraulisch aktives Additiv zur Herstellung von Quellzementen, Quellgipsen, Estrichen und Putzen, sowie zur Mikrofaserbewehrung in Zementen und Mörteln.

Dabei gilt, daß das nach dem erfindungsgemäßen Verfahren erhältliche Präzipitat auf Basis einer kristallinen Kristallwasser-haltigen Calciumverbindung sowohl in Form einer Slurry oder Suspension als auch in Form eines trockenen Feststoffes oder auch in calcinierter und gemahlener Form als Füllstoff bzw. Additiv eingesetzt werden kann.

Gemäß einem weiteren Aspekt betrifft die vorliegende Erfindung die Verwendung der erfindungsgemäß hergestellten Kristallwasser-haltigen Calciumverbindungen als Präzipitat im entwässerten und gemahlenen Zustand als Additiv in der Baustoffindustrie, vorzugsweise als Quellkomponente für Zemente und für das explosionsfreie Sprengen sowie zur Mikrofaserbewehrung für Zemente oder Mörtel.

## Patentansprüche

1. Verfahren zur Herstellung Kristallwasser-haltiger Calciumverbindungen durch chemische Umsetzung von Natriumaluminat und Calciumhydroxid in wäßriger Lösung bzw. Aufschlämmung,
**dadurch gekennzeichnet, daß** man
a) eine wäßrige alkalische Natriumaluminat-Lösung mit festem oder gelöstem bzw. suspendiertem Calcium(hydr)oxid (Kalkmilch) in Gegenwart von Kohlendioxid umsetzt unter Bildung eines Präzipitats aus einem Gemisch von Kristallwasser-haltigen Calciumaluminathydraten mit der folgenden modalen Summenformel:
xCaO . Al₂O₃. yH₂O (worin x = 3-6, y = 6-32),
b) das dabei erhaltene Präzipitat in an sich bekannter Weise durch Sedimentation abtrennt, entwässert, mit Wasser wäscht und den dabei erhaltenen Filterkuchen gegebenenfalls trocknet;
c) den in der Stufe (b) erhaltenen Filterkuchen in feuchter oder getrockneter Form in Wasser suspendiert und mit mindestens einer Mineralsäure und/oder mindestens einem Salz derselben versetzt unter Bildung eines Kristallwasser-haltigen Calciumaluminatsalz-Präzipitats,
d) das man in an sich bekannter Weise durch Sedimentation abtrennt, entwässert, mit Wasser wäscht und den dabei erhaltenen Filterkuchen zerkleinert und gegebenenfalls trocknet und/oder mahlt.

2. Verfahren nach Anspruch 1, **dadurch gekennzeichnet, daß** man als wäßrige alkalische Natriumaluminatlösung eine Abfallbeizlauge, wie sie bei der Oberflächenbehandlung von Aluminiummetall gewonnen wird, einsetzt.

3. Verfahren nach Anspruch 1 oder 2, **dadurch gekennzeichnet, daß** man eine wäßrige alkalische Natriumaluminatlösung bzw. Abfallbeizlauge verwendet, in der Na₂O und Al₂O₃ in einem Molverhältnis von (1,0 bis 10,0):1, vorzugsweise von (1,2 bis 2,5):1, vorliegen.

4. Verfahren nach mindestens einem der Ansprüche 1 bis 3, **dadurch gekennzeichnet, daß** man in der Stufe (a) die wäßrige alkalische Natriumaluminatlösung vorlegt und dann Calcium(hydr)oxid zugibt.

5. Verfahren nach mindestens einem der Ansprüche 1 bis 3, **dadurch gekennzeichnet, daß** man in der Stufe (a) Calcium(hydr)oxid vorlegt und dann die wäßrige alkalische Natriumaluminatlösung zugibt.

6. Verfahren Anspruch 4 oder 5, **dadurch gekennzeichnet, daß** man, bezogen auf 1 mol Al₂O₃-Äquivalent, 2 bis 8 mol CaO-Äquivalent, vorzugsweise 3 bis 5 mol CaO-Äquivalent, zugibt.

7. Verfahren nach mindestens einem der Ansprüche 1 bis 6, **dadurch gekennzeichnet, daß** man die Präzipitat-Fällung in der Stufe (a) innerhalb einer Reaktionszeit von 5 bis 3000 min, vorzugsweise von 60 bis 600 min, bei einer Temperatur von 5 bis 60°C, vorzugsweise von 30 bis 50°C, durchführt.

8. Verfahren nach mindestens einem der Ansprüche 1 bis 7, **dadurch gekennzeichnet, daß** man das Calciumaluminathydrat-Präzipitat in der Stufe (b) mechanisch entwässert, vorzugsweise unter Anwendung einer Druckfiltration, insbesondere mittels einer Kammerfilterpresse oder einer Membranfilterpresse, sowie alternativ unter Verwendung eines Vakuumbandfilters oder einer Zentrifuge.

9. Verfahren nach Anspruch 8, **dadurch gekennzeichnet, daß** man das entwässerte Calciumaluminathydrat-Präzipitat bei einer Temperatur von < 100°C trocknet und zerkleinert, vorzugsweise mahlt.

10. Verfahren nach Anspruch 8, **dadurch gekennzeichnet, daß** man das entwässerte Calciumaluminathydrat-Präzipitat bei einer Temperatur von 100 bis 1300°C, vorzugsweise von 100 bis 500°C, trocknet bzw. calciniert und zerkleinert, vorzugsweise mahlt.

11. Verfahren nach mindestens einem der Ansprüche 1 bis 8, **dadurch gekennzeichnet, daß** man den entwässerten und gegebenenfalls gewaschenen Filterkuchen der Stufe (b) in Wasser suspendiert und mit mindestens einer Mineralsäure und/oder mindestens einem Salz derselben versetzt unter Bildung eines Kristallwasser-haltigen hochweißen Calciumaluminatsalz-Präzipitats. das man gegebenenfalls nach Anspruch 9 oder Anspruch 10 weiterverarbeitet.

12. Verfahren nach Anspruch 11, **dadurch gekennzeichnet, daß** man als Mineralsäure Salzsäure, Flußsäure, Schwefelsäure, Kieselsäure und/oder Kohlensäure bzw. Salze derselben, insbesondere deren Alkalimetall-, Erdalkalimetall- und Aluminiumsalze, verwendet.

13. Verfahren nach Anspruch 12, **dadurch gekennzeichnet, daß** man als Mineralsäure eine Aluminium-haltige Schwefelsäure, vorzugsweise eine Abfallsäure aus Eloxal-Betrieben, verwendet.

14. Verfahren nach Anspruch 11, **dadurch gekennzeichnet, daß** man dem in Wasser suspendierten Filterkuchen der Stufe (b), bezogen auf dessen Gesamt-Aluminiumgehalt, Sulfat im Verhältnis 1 Gew.-Teil Al zu 4 bis 7 Gew.-Teilen SO₄ zugibt.

15. Verfahren nach Anspruch 14, **dadurch gekennzeichnet, daß** man zusätzlich Anionen der in Anspruch 12 genannten weiteren Mineralsäure(n) und/oder deren Salze in Mengen von 1 Gew.-Teile Al zu 0,5 bis 10 Gew.-Teiten Anionen, bezogen auf den Gesamt-Aluminiumgehalt der Suspension, zugibt.

16. Verwendung der bei dem Verfahren nach einem der Ansprüche 1 bis 15 erhaltenen Produkte in Form einer wäßrigen Suspension und/oder in fester Form als hochweißes Streich-Pigment bei der Herstellung von Farben und Lacken, vorzugsweise für den Innen- und Außenbereich.

17. Verwendung der bei dem Verfahren nach einem der Ansprüche 1 bis 15 erhaltenen Produkte als flammhemmender Füllstoff für den Brandschutz in Baustoffen, Isoliermaterialien, Putzen, für die Herstellung von Farben und Lakken, als Füllstoff zur Herstellung von Gips- bzw. Bauplatten, zur Mikrofaserbewehrung in Zementen und Mörteln oder als Quellkomponente bei der Herstellung von explosionsfreien Sprengstoffen.

## Claims

1. A process for preparing crystallization water-containing calcium compounds by a chemical reaction between sodium aluminate and calcium hydroxide in an aqueous solution or suspension (slurry),
**characterized in that**
a) an aqueous alkaline solution of sodium aluminate is reacted with solid or dissolved respectively suspended calcium oxide or calcium hydroxide (lime milk) in the presence of carbon dioxide for forming a precipitate of a mixture of crystallization water-containing calcium aluminate hydrates having the following modal formula:
xCaO . Al₂O₃. yH₂O (wherein x = 3-6; y = 6-32),
b) the thus obtained precipitate, in a manner known per se, is separated by sedimentation, dehydrated, washed with water and the obtained filter cake is optionally dried;
c) the filter cake obtained in step (b) is suspended in wet or dried form in water and added with at least one mineral acid and/or at least one salt thereof for forming a crystallization water-containing calcium aluminate salt precipitate,
d) the precipitate of step (c), in a manner known per se, is separated by sedimentation, dehydrated, washed with water and the obtained filter cake is comminuted and optionally dried and/or milled.

2. The process according to claim 1, **characterized in that** pickling wastes as obtained in the surface treatment of aluminum metal are used as the aqueous alkaline sodium aluminate solution.

3. The process according to claim 1 or 2, **characterized in that** an aqueous alkaline sodium aluminate solution or pickling wastes is (are) used wherein Na₂O and Al₂O₃ are present in a molar ratio of (1.0 to 10.0):1, preferably (1.2 to 2.5):1.

4. The process according to at least one of claims 1 to 3, **characterized in that** in step (a) the calcium oxide or calcium hydroxide is added to the aqueous alkaline sodium aluminate solution.

5. The process according to at least one of claims 1 to 3, **characterized in that** in step (a) the aqueous alkaline sodium aluminate solution is added to the calcium oxide or calcium hydroxide.

6. The process according to claim 4 or 5, **characterized in that** from 2 to 8 mols CaO-equivalent, preferably from 3 to 5 mols CaO-equivalent, are added, based on 1 mol Al₂O₃-equivalent.

7. The process according to at least one of claims 1 to 6, **characterized in that** the precipitation in step (a) is carried out within a reaction time of from 5 to 3000 min, preferably from 60 to 600 min, at a temperature of from 5 to 60 °C, preferably from 30 to 50 °C.

8. The process according to at least one of claims 1 to 7, **characterized in that** the calcium aluminate hydrate precipitate in step (b) is mechanically dehydrated, preferably by pressure filtration, in particular by using a chamber filter press or a membrane filter press, or alternatively by using a vacuum belt filter or a centrifugal.

9. The process according to claim 8, **characterized in that** the dehydrated calcium aluminate hydrate precipitate is dried and comminuted, preferably milled, at a temperature of less than 100 °C.

10. The process according to claim 8, **characterized in that** the dehydrated calcium aluminate hydrate precipitate is dried or calcined and comminuted, preferably milled, at a temperature of from 100 to 1300 °C, preferably from 100 to 500 °C.

11. The process according to at least one of claims 1 to 8, **characterized in that** the dehydrated and optionally washed filter cake of step (b) is suspended in water and added with at least one mineral acid and/or at least one salt thereof for forming a crystallization water-containing superwhite calcium aluminate salt precipitate, which is optionally further processed according to claim 9 or claim 10.

12. The process according to claim 11, **characterized in that**, as a mineral acid, hydrochloric acid, hydrofluoric acid, sulfuric acid, silicic acid and/or carbonic acid or salts thereof, in particular alkali metal, alkaline earth metal and aluminum salts thereof, are used.

13. The process according to claim 12, **characterized in that**, as a mineral acid, an aluminum containing sulfuric acid, preferably a waste acid from Eloxal plants, is used.

14. The process according to claim 11, **characterized in that** to the filter cake of step (b), suspended in water, sulfate is added in a ratio of 1 part by weight to 4 - 7 parts by weight of SO₄, based on the total aluminum content of the filter cake.

15. The process according to claim 14, **characterized in that** additionally anions of the further mineral acid(s) listed in claim 12 and/or salts thereof are added in amounts of 1 part by weight of Al to 0.5 to 10 parts by weight of anions, based on the total aluminum content of the suspension.

16. Use of the product obtained according to the process of any of claims 1 to 15 in the form of an aqueous suspension and/or in a solid form as a superwhite paint-pigment in the production of paints and lacquers, preferably for indoor and outdoor areas.

17. Use of the product obtained in the process according to any of claims 1 to 15 as a flame-retardant filler for fire protection in constructions materials, insulating materials, mortars, for the production of paints and lacquers, as a filler for the production of gypsum and construction panels, as a microfiber fortification in cements and mortars or as a swelling component in the production of explosion-free explosives.

## Revendications

1. Procédé pour la préparation des composés de calcium contenant de l'eau de cristallisation par réaction chimique de l'aluminate de sodium avec le hydroxyde de calcium en solution ou en suspension aqueuse,
**caractérisé en ce que**
a) une solution alcaline aqueuse de l'aluminate de sodium est traitée avec l'oxyde ou le hydroxyde de calcium (lait de chaux) en présence du gaz carbonique pour former un précipité d'une mélange d'aluminates hydrates de calcium comprenant de l'eau de cristallisation et ayant une formula brute comme suit:
xCaO . Al₂O₃. yH₂O (dans laquelle x = 3-6; y = 6-32),
b) le précipité obtenu est, de façon en soi connu, séparé par sédimentation, déshydraté, lavé avec de l'eau et le gateau de filtrage obtenu est, le cas échéant,séché.
c) le gateau de filtration obtenu en étape (b) en forme humide ou séché, est suspendu dans l'eau et traité avec au moins un acide minérale et/ou au moins un sel duquel pour former un précipité du sel de l'aluminate de calcium contenant de l'eau de cristallisation,
d) le précipité d'étape (c), est, de façon en soi connue, séparé, déshydraté, lavé avec de l'eau et le gateau de filtration obtenu est comminué et, le cas échéant, séché et/ou moulu.

2. Procédé selon la revendication 1, **caractérisé en ce que** en tant que solution alcaline aqueuse de l'aluminate de sodium un décapant residuaire obtenue dans le traitement d'une surface d'aluminium métallique est utilisé.

3. Procédé selon la revendication 1 ou 2, **caractérisé en ce que** une solution alcaline aqueuse de l'aluminate de sodium ou un décapant residuaire est utilisé, dans lequel Na₂O et Al₂O₃ sont présents en une rapport molaire de (1,0 à 10,0):1, de préférence de (1,2 à 2,5):1.

4. Procédé selon au moins une des revendications 1 à 3, **caractérisé en ce que** dans l'étape (a) l'oxyde ou le hydroxyde de calcium est ajouté à la solution alcaline aqueuse de l'aluminate de sodium.

5. Procédé selon au moins une des revendications 1 à 3, **caractérisé en ce que** dans l'étape (a) la solution alcaline aqueuse de l'aluminate de sodium est ajoutée à l'oxyde ou le hydroxyde de calcium.

6. Procédé selon la revendication 4 ou 5, **caractérisé en ce que** 2 à 8 moles d'équivalent de CaO, de préférence 3 à 5 moles d'équivalent de CaO sont ajoutés à 1 mole d'équivalent de Al₂O₃.

7. Procédé selon au moins une des revendications 1 à 6, **caractérisé en ce que** la précipitation du précipité dans l'étape (a) est effectuée dans un temps de réaction de 5 à 3000 min, de préférence de 60 à 600 min, à une temperature de 5 à 60 °C, de préférence de 30 à 50 °C.

8. Procédé selon au moins une des revendications 1 à 7, **caractérisé en ce que**, le précipité de l'aluminate hydrate de calcium dans l'étape (b) est déshydraté, de préférence par l'utilisation d'une filtration pressurisée, en particulier au moyen d'un filtre-presse à chambres ou une membrane-presse ou, alternativement, par l'utilisation d'une presse de bande ou d'une centrifugeuse.

9. Procédé selon la revendication 8, **caractérisé en ce que**, le précipité déshydraté de l'aluminate hydrate de calcium est séché et moulu à une température de < 100 °C, de préférence moulu.

10. Procédé selon la revendication 8, **caractérisé en ce que**, le précipité déshydraté de l'aluminate hydrate de calcium est séché ou calciné et moulu à une température de 100 à 1300 °C, de préférence de 100 à 500 °C, de préférence moulu.

11. Procédé selon au moins une des revendications 1 à 8, **caractérisé en ce que** le gateau de filtration deshydraté et, le cas échéant, lavé, obtenu dans l'étape (b) est suspendu dans l'eau et additionné en au moins d'un acide minérale et/ou au moins d'un sel duquel pour former un précipité superblanc du sel de l'aluminate de calcium qui est, le cas échéant, transformé selon la revendication 9 ou la revendication 10.

12. Procédé selon la revendication 11, **caractérisé en ce que** en tant que acide minérale, l'acide chlorhydrique, l'acide fluorhydrique, l'acide silicique et/ou l'acide carbonique et les sels desquels, en particular les sels d'alcali, d'alcali terreux et d'aluminium, sont utilisés.

13. Procédé selon la revendication 12, **caractérisé en ce que** en tant que acide minérale l'acide sulfurique contenant de l'aluminium, de préférence un acide residuaire des plants d'Eloxal, est utilisé.

14. Procédé selon la revendication 11, **caractérisé en ce qu'**un sulfate est ajouté au gateau de filtration suspendu dans l'eau de l'étape (b) en un rapport de 1 part de poids de Al à 4 à 7 parts de poids de SO₄, basé sur le teneur total en aluminium.

15. Procédé selon la revendication 14, **caractérisé en ce que** des anions des acides minérales énumerés dans la revendication 12 et/ou des sels desquels sont ajoutés supplémentairement en des quantités de 1 part de poids de Al à 0,5 à 10 parts de poids d'anions, basé sur le teneur total en Al de la suspension.

16. Utilisation des produits obtenus dans le procédé selon l'une des revendications 1 à 15 en forme d'une suspension aqueuse et/ou en forme solide en tant que pigment à peindre dans la production des peintures et des vernis, de préférence pour l'intérieur et l'extérieur.

17. Utilisation des produits obtenus dans le procédé selon l'une des revendications 1 à 15 en tant que diluent ignifugé pour le pare-feu dans des matériaux de construction, des matériaux d'isolation, des enduits, pour la production des peintures et des vernis, en tant que eluant pour la production des plaques de construction et des plaques en plâtre, pour la fortification des ciments et des enduits avec des microfibres ou en tant que agents de gonflage dans la production des explosives sans explosion.
